# EUROPÄISCHE PATENTSCHRIFT

(11) **EP 1 591 186 B1**
(45) Veröffentlichungstag und Bekanntmachung des Hinweises auf die Patenterteilung: **22.12.2010**
(21) Anmeldenummer: 05013207.5
(22) Anmeldetag: 05.10.2001
(51) Int. Cl.: B23K 9/10, B23K 9/095, B23K 9/32

(54) **Verfahren zum Einstellen eines Schweissgerätes**
Method for setting conditions of a welding device
Procédé pour régler les paramètres d'un dispositif de soudage

(30) Priorität: 17.10.2000 AT 178400
(43) Veröffentlichungstag der Anmeldung: 02.11.2005
(62) Teilanmeldung aus: 01973795.6
(73) Patentinhaber: Fronius International GmbH, 4643 Pettenbach (AT)
(72) Erfinder: Zauner, Michael, 4072 Alkoven (AT); Hiesmayr, Alfred, 4642 Sattledt (AT)
(74) Vertreter: Ofner, Clemens

(56) Entgegenhaltungen:
- EP-A- 0 901 865
- WO-A-99/58286
- DE-A- 19 733 638
- DE-U- 9 301 390
- US-A- 5 278 390

## Beschreibung

Die Erfindung betrifft ein Verfahren zum Einstellen eines Schweißgerätes, wie dies im Oberbegriff des Anspruches 1 beschrieben ist.

Es sind bereits Schweißgeräte bekannt, bei denen während eines Schweißprozesses eine Umschaltung des Schweißgerätes möglich ist, wobei hierzu zum Umschalten des Schweißgerätes ein Schaltelement, wie beispielsweise eine Brennertaste, aktiviert werden muss.

Weiters sind Schweißgeräte bekannt, bei denen über eine Ein- und/oder Ausgabevorrichtung unterschiedliche Schweißparameter und/oder Betriebsarten für einen Schweißprozess eingestellt werden. Die Ein- und/oder Ausgabevorrichtung wird aus zumindest einem Taster für die Betriebsarten und einem Drehgeber für die Sollwerte sowie einem oder mehreren Anzeigeelementen, wie beispielsweise einer Leuchtdiode, gebildet, wobei die Einstellungen von der Ein- und/oder Ausgabevorrichtung an eine Steuervorrichtung zur Durchführung eines entsprechenden Schweißprozesses übergeben werden. Nachteilig ist hierbei, dass für jede mögliche Einstellung des Schweißgerätes zumindest ein Taster oder ein Drehgeber angeordnet ist.

Aus der DE 197 33 638 A ist ein Verfahren und eine Vorrichtung zur Steuerung eines Schweißgerätes bekannt, bei dem eine Vielzahl von Parametern und Bediengrößen über mindestens ein Stellmittel veränderbar sind. Mit dem Stellmittel am Schweißgerät wird in einer Arbeitsstellung eine kontinuierliche Veränderung eines ersten Signals und in einer zweiten Arbeitsstellung mindestens ein Schaltsignal erzeugt. Die Parameter des Schweißvorgangs werden auf einer Anzeigevorrichtung angezeigt und mittels des Schaltsignals ist ein Auslöse- oder Bestätigungssignal für die Aktivierung des Parameters oder einer Umschaltung für weitere Parameter erzeugbar. Nachteilig ist hierbei, dass zum Umschalten der Schweißparameter der Benutzer diese Einstellungen am Schweißgerät vornehmen muss, wodurch er den Schweißprozess unterbrechen muss. Bei derartigen Schweißgeräten werden die einzelnen Einstellungen vor dem Start des Schweißprozesses vorgenommen, sodass anschließend nach dem Zünden des Lichtbogens der Schweißprozess, insbesondere die Schweißspannung und/ oder der Schweißstrom, entsprechend den eingestellten Parametern automatisch abläuft und keinerlei Umschaltung der Parameter während des Schweißprozesses vorgenommen wird.

Aus der DE 93 01 390 U ist ein Schweißgerät bekannt, bei dem auf der Bedienungsfläche eine Anzeigefläche mit einer Mehrzahl von verschiedenen, elektronisch angesteuerten Anzeigepositionen für verschiedene Funktionen des Schweißgerätes vorgesehen sind. Mit einem ersten Betätigungselement für die Funktionsauswahl wird die einzustellende Anzeigeposition ausgewählt und mit einem zweiten Betätigungselement für die Einstellung der Anzeige wird der einzustellende Wert verändert. Nachteilig ist hierbei, dass für sämtliche Einstellmöglichkeiten jeweils eine eigene Anzeigeposition notwendig ist und somit immer nur die notwendigsten Parameter an der Bedienungsoberfläche ausgeführt werden können, um eine übersichtliche Gestaltung des Schweißgerätes zu erreichen.

Aus der EP 0 901 865 B1 ist eine Steuervorrichtung und ein Verfahren zum Steuern eines Schweißgeräts bekannt, dass es einem Bediener ermöglicht, sich seine Bedienfläche selbst zu gestalten. Es ist offenbart, dass mittels Bedientasten Schweißparameter ausgewählt und diese in zwei LCD-Anzeigen angezeigt werden und mittels eines Hauptreglers verändert werden können. Zur Anwenderanpassung kann der Benutzer Steuerorgane der Bedienfläche derart konfigurieren, dass bei Auswahl eines Steuerorgans ein Funktionsablauf, der mehrere Arbeits- bzw. Programmschritte umfassen kann, ausgeführt wird. Nachteilig ist auch hier, dass auf der Bedienfläche mehrere Steuerorgane vorhanden sein müssen um die wahlfreie Anwenderanpassung zu ermöglichen.

Der Erfindung liegt die Aufgabe zugrunde, eine verbesserte Einstellmöglichkeit bzw. Handhabung des Schweißgerätes zu ermöglichen.

Die Aufgabe der Erfindung wird gemäß Anspruch 1 gelöst. Vorteilhaft ist hierbei, dass eine erhebliche Einsparung von Bauelementen, wie Taster, Drehgeber, Anzeigeelemente usw., eingespart werden können, wobei jedoch der Benutzer die Möglichkeit hat, unterschiedliche Werte für einen bestimmten Schweißparameter zu einer bestimmten Betriebsart des Schweißgerätes auswählen zu können. Damit kann die Ein- und/ oder Ausgabevorrichtung für ein Schweißgerät kostengünstig hergestellt werden und es wird eine erhebliche Größenreduktion der Ein- und/oder Ausgabevorrichtung erzielt, so dass ein kompaktes kleines Schweißgerät mit mehreren Einstellmöglichkeiten mit nur einem Taster geschaffen werden kann.

Weitere vorteilhafte Ausbildungen sind in den Ansprüchen 2 bis 8 beschrieben. Die sich daraus ergebenden Vorteile sind der Beschreibung zu entnehmen.

Die Erfindung wird anschließend durch Ausführungsbeispiele näher beschrieben.

Es zeigen:
- Fig. 1: eine schematische Darstellung einer Schweißmaschine bzw. eines Schweißgerätes;
- Fig. 2: ein nicht erfindungsgemäßes Ablaufdiagramm eines Schweißprozesses eines Schweißgerätes in vereinfachter, schematischer Darstellung;
- Fig. 3: ein nicht erfindungsgemäßes weiteres Ablaufdiagramm eines weiteren möglichen Schweißprozesses eines Schweißgerätes in vereinfachter, schematischer Darstellung;
- Fig. 4: eine Frontansicht des Schweißgerätes mit einer Ein- und/oder Ausgabevorrichtung, in vereinfachter, schematischer Darstellung;
- Fig. 5: eine Frontansicht eines weiteren Ausführungsbeispieles des Schweißgerätes mit ei- ner Ein- und/oder Ausgabevorrichtung in vereinfachter, schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

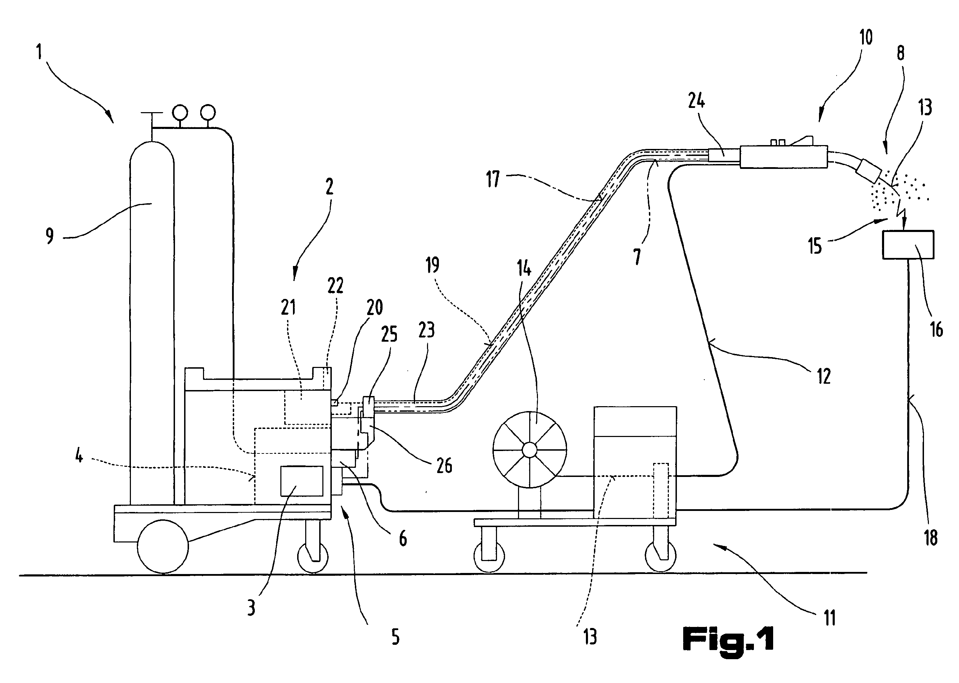

In Fig. 1 ist eine Schweißanlage bzw. ein Schweißgerät 1 für verschiedenste Schweißverfahren, wie z.B. MIG/MAG-Schweißen bzw. TIG-Schweißen oder Elektroden-Schweißverfahren usw., gezeigt.

Das Schweißgerät 1 umfasst eine Schweißstromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO2, Helium oder Argon und dgl., zwischen einem Gasspeicher 9 und einem Schweißbrenner 10 angeordnet ist.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert.

Grundsätzlich ist zu erwähnen, dass für die unterschiedlichen Schweißverfahren bzw. Schweißgeräte, wie beispielsweise WIG-Geräte oder MIG/MAG-Geräte, nicht alle zuvor benannten Komponenten verwendet bzw. eingesetzt werden müssen.

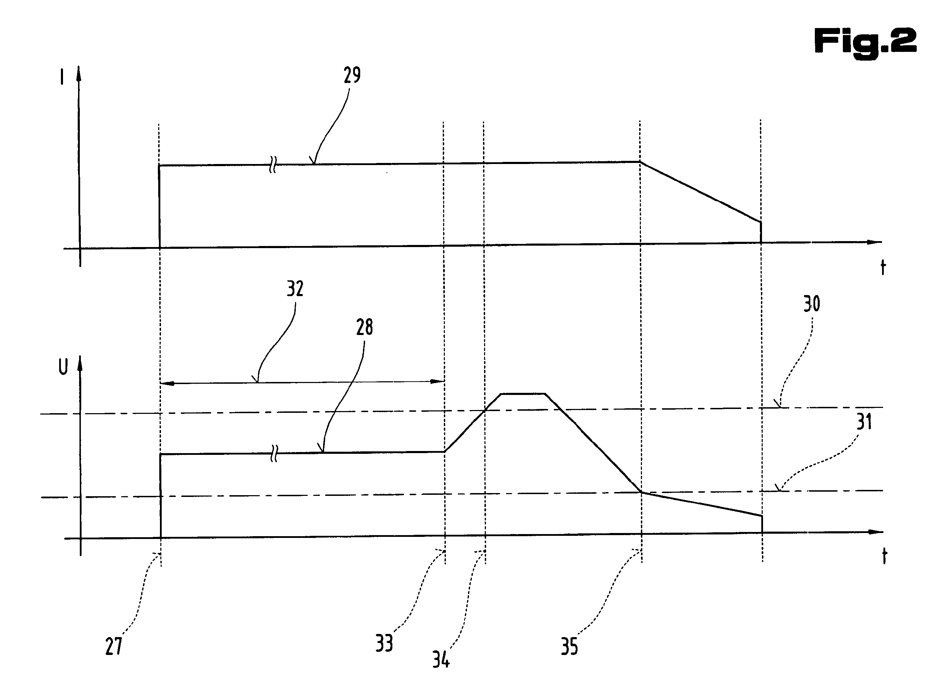

In Fig. 2 sind vereinfacht dargestellte Diagramme einer Ausgangskennlinie des Schweißgerätes 1, insbesondere eines WIG-Schweißgerätes, für ein Verfahren zum Steuern oder Regeln eines Schweißprozesses gezeigt, wobei auf der Ordinate des ersten Diagramms der Ausgangsstrom I und auf der Ordinate des zweiten Diagramms die Ausgangsspannung U zeitsynchron aufgetragen sind. Auf der Abszisse der beiden Diagramme ist die Zeit t eingetragen.

Wie aus der Zusammenschau der beiden Diagramme in Fig. 2 ersichtlich ist, wird zu einem beliebigen Zeitpunkt 27 ein Schweißprozess gestartet, d.h., dass der Lichtbogen 15 zwischen dem Werkstück 16 und dem Schweißdraht 13 gezündet wird, wobei nach dem Zünden des Lichtbogens 15 der eingestellte Schweißprozess durchgeführt wird. Die Steuerung und/oder Regelung des Schweißprozesses entsprechend den vorgegebenen Schweißparametem und/ oder der Betriebsart und/oder dem eingestellten Schweißprogramm wird von der Steuervorrichtung 4 und/oder der Schweißstromquelle 2, wie es aus dem Stand der Technik für handelsübliche Schweißgeräte bekannt ist, durchgeführt.

Durch das Verwenden von zwei Schwellwerten 30, 31 kann der Benutzer frühzeitig das Ende des Schweißprozesses durch Überschreiten des ersten Schwellwertes 30 einleiten, wobei jedoch der Schweißprozess noch beliebig lange weitergeführt werden kann. Erst bei Unterschreiten des zweiten Schwellwertes 31 wird das tatsächliche Ende des Schweißprozesses von der Steuervorrichtung 4 gesteuert durchgeführt. Dadurch wird erreicht, dass ein langsames Abkühlen des Werkstückes 16 und der Schweißnaht ermöglicht wird, wodurch eine Kraterbildung am Schweißnahtende verhindert werden kann.

Selbstverständlich ist es möglich, dass bereits nach dem erstmaligen Über- bzw. Unterschreiten eines Schwellwertes 30 oder 31 das Schweißendeprogramm ausgeführt werden kann und das Verfahren zum Steuern oder Regeln des Schweißprozesses in Abhängigkeit der Schweiß- oder Lichtbogenspannung 28 und/oder des Schweißstromes 29 nicht auf das zuvor beschriebene Beispiel beschränkt ist. Es ist weiters auch möglich, dass nur ein Schwellwert 30 oder 31 definiert wird, wobei dieser beispielsweise zweimal oder mehrmals über- bzw. unterschritten werden muss, um die Aktivierung des Schweißendeprogrammes einzuleiten.

Es kann also gesagt werden, dass zum Beenden des Schweißprozesses ein Schweißendeprogramm durchgeführt wird, wobei zum Aktivierten des Schweißendeprogrammes ein beeinflussbarer Schweißparameter, insbesondere die Schweiß- oder Lichtbogenspannung 28 und/ oder der Schweißstrom 29, überwacht wird und bei Überschreiten eines vorgegebenen Schwellwertes 30, 31 des Schweißparameters, insbesondere der Schweiß- oder Lichtbogenspannung 28 und/oder des Schweißstromes 29, das Schweißendeprogramm freigegeben bzw. ausgeführt wird.

Ein wesentlicher Vorteil einer derartigen Steuerung des Schweißgerätes 1 am Ende des Schweißprozesses liegt darin, dass der Schweißbrenner 10 ohne eine Brennertaste aufgebaut werden kann, da die Aktivierung des Schweißprogrammes "Schweißende", also des Schweißendeprogrammes, über einen vom Benutzer während des Schweißprozesses beeinflussbaren Schweißparameter, insbesondere über die Schweiß- oder Lichtbogenspannung 28 und/oder die Lichtbogenlänge und/oder den Schweißstrom 29, durchgeführt wird und somit ein vereinfachter Aufbau sowie eine kostengünstige Herstellung des Schweißbrenners 10 ermöglicht wird. Dadurch wird auch eine komfortablere Handhabung des Schweißbrenners erzielt.

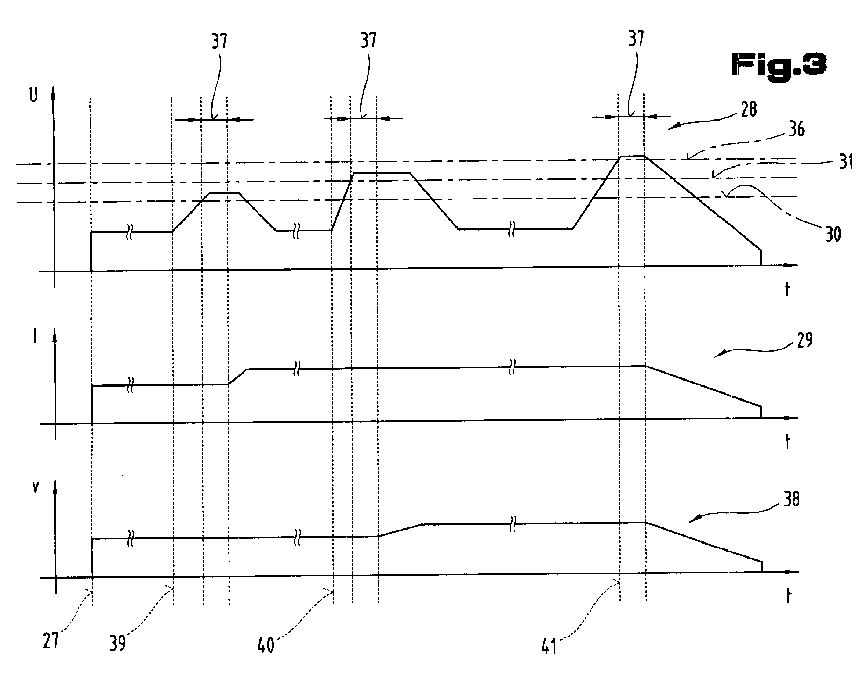

Bei diesem Beispiel in Fig. 3 werden nunmehr mehrere, insbesondere drei Schwellwerte 30, 31, 36 festgelegt bzw. definiert, wobei bei Über- und/oder Unterschreiten dieser Schwellwerte 30, 31, 36 von der Steuervorrichtung 4 ohne Beendigung des Schweißprozesses, also ohne Beendigung des Lichtbogens 15 (siehe Fig. 1), mehrere Funktionen, wie beispielsweise eine Umschaltung von einem Schweißstrom 29 auf einen weiteren höheren Schweißstrom 29, durchgeführt werden. Selbstverständlich ist es dabei möglich, dass beliebige Schweißparameter bzw. Schweißprogramme aufgerufen bzw. ausgeführt werden können.

Durch Festlegen mehrerer Schwellwerte 30, 31, 36, wie dies in Fig. 3 ersichtlich ist, können nunmehr mehrere unterschiedliche Funktionen oder Abläufe durchgeführt werden, wobei für jeden Schwellwert 30, 31, 36 eine entsprechende Funktion bzw. ein Ablauf hinterlegt ist. Hierzu ist es beispielsweise möglich, dass entsprechend den vorhandenen Schwellwerten 30, 31, 36 am Schweißbrenner 10 entsprechende Anzeigeelemente, insbesondere Leuchtdioden, angeordnet sind, so dass bei Aktivierung eines Schwellwertes 30, 31, 36 das entsprechende Anzeigeelement zu leuchten beginnt, so dass der Benutzer eine optische Anzeige für den gerade eingeleiteten Steuerablauf bzw. der Funktionsumschaltung erhält.

Wie aus der Fig. 3 ersichtlich ist, werden mehrere, insbesondere drei Schwellwerte 30, 31, 36 definiert, wobei beispielsweise der erste Schwellwert 30 für das Umschalten des Schweißstromes 29, der zweite Schwellwert 31 für die Umschaltung der Drahtfördergeschwindigkeit und der dritte Schwellwert 36 für die Freigabe und Durchführung des Schweißendeprogrammes definiert ist.

Für die Funktionsbeschreibung dieses Beispiels wurden nunmehr in Fig. 3 die wesentlichsten Abläufe in Form von Diagrammen des Schweißprozesses dargestellt, wobei im ersten Diagramm die Schweiß- oder Lichtbogenspannung 28, im zweiten Diagramm der Schweißstrom 29 und im dritten Diagramm die Drahtvorschubgeschwindigkeit 38 schematische aufgetragen ist.

Nach dem Start des Schweißprozesses wird zu einem beliebigen Zeitpunkt 39 vom Benutzer der Schweißbrenner 10 vom Werkstück 16 abgehoben, wodurch sich die Schweiß- oder Lichtbogenspannung 28 erhöht. Der Benutzer kann nun durch die Anzeigeelemente erkennen, wann der erste Schwellwert 30 überschritten wird, da diese bei Überschreiten von der Steuervorrichtung 4 aktiviert wird. Will nun der Benutzer die Funktion bzw. den Steuerablauf zu dem ersten Schwellwert 30 auswählen bzw. aktivieren, so behält der Benutzer den Schweißbrenner 4 über die definierte Zeitdauer 37, bevorzugt von ca. 2 Sekunden, in dieser Position. Durch zusätzliche Überwachung der Zeitdauer 37 kann die Steuervorrichtung 4 erkennen, dass nunmehr die Funktion bzw. der Steuerablauf zu dem ersten Schwellwert 30 aktiviert werden soll, d.h., dass in dem dargestellten Ausführungsbeispiel der Schweißstrom 29 von einem ersten Wert auf einen weiteren Wert erhöht werden soll. Anschließend kann der Benutzer den Schweißbrenner 4 wiederum in die ursprüngliche Position bringen, so dass die Schweiß- oder Lichtbogenspannung 28 unterhalb des Schwellwertes 30 abgesenkt wird und somit das Anzeigeelement deaktiviert wird. Hierbei ist es beispielsweise auch möglich, dass bei einer zweimaligen Auswahl dieses Schwellwertes 30 eine Rückstellung des Schweißstromes 29 auf den ursprünglichen Wert erzielt werden kann.

Damit der Benutzer die Funktion bzw. den Steuerablauf für den zweiten Schwellwert 31 aktivieren kann, ist es wiederum notwendig, dass die Schweiß- oder Lichtbogenspannung 28 entsprechend erhöht wird. Zum Zeitpunkt 40 wird vom Benutzer der Schweißbrenner 10 wiederum vom Werkstück 16 abgehoben, wodurch sich die Schweiß- oder Lichtbogenspannung 28 und somit die Lichtbogenlänge des Lichtbogens 15 aufgrund der Widerstandsänderung erhöht. Nachdem der erste Schwellwert 30 überschritten wird, wird vom Benutzer eine weitere Entfernung des Schweißbrenners 10 durchgeführt, so dass die Schweiß- oder Lichtbogenspannung 28 weiter angehoben wird. Überschreitet nunmehr die Schweiß- oder Lichtbogenspannung 28 den zweiten Schwellwert 31, so aktiviert die Steuervorrichtung 4 das Anzeigeelement für den zweiten Schwellwert 31, so dass dies der Benutzer erkennen kann und dieser den Schweißbrenner 10 in dieser Position über die notwendige Zeitdauer 37 zum Aktivieren der hinterlegten Funktion bzw. des hinterlegten Steuerablaufes halten kann, d.h., dass in dem dargestellten Beispiel nach Ablauf der definierten Zeitdauer 37 die Drahtvorschubgeschwindigkeit 38 beispielsweise erhöht wird.

Möchte der Benutzer den Schweißprozess beenden, so entfernt er wiederum entsprechend dem zuvor beschriebenen Ablauf den Schweißbrenner 10 vom Werkstück 16, bis das dritte Anzeigeelement für den Schwellwert 36 zu leuchten beginnt, wie dies zum Zeitpunkt 41 ersichtlich ist, so dass nach Ablauf der Zeitdauer 37 die hinterlegte Funktion, also das Schweißendeprogramm, aktiviert wird. Nunmehr wird gleichzeitig mit dem Überschreiten des Schwellwertes 36 das Schweißendeprogramm aktiviert und durchgeführt und der Schweißstrom 29 wird rampenförmig unter Beibehaltung der Schutzgasatmosphäre beendet.

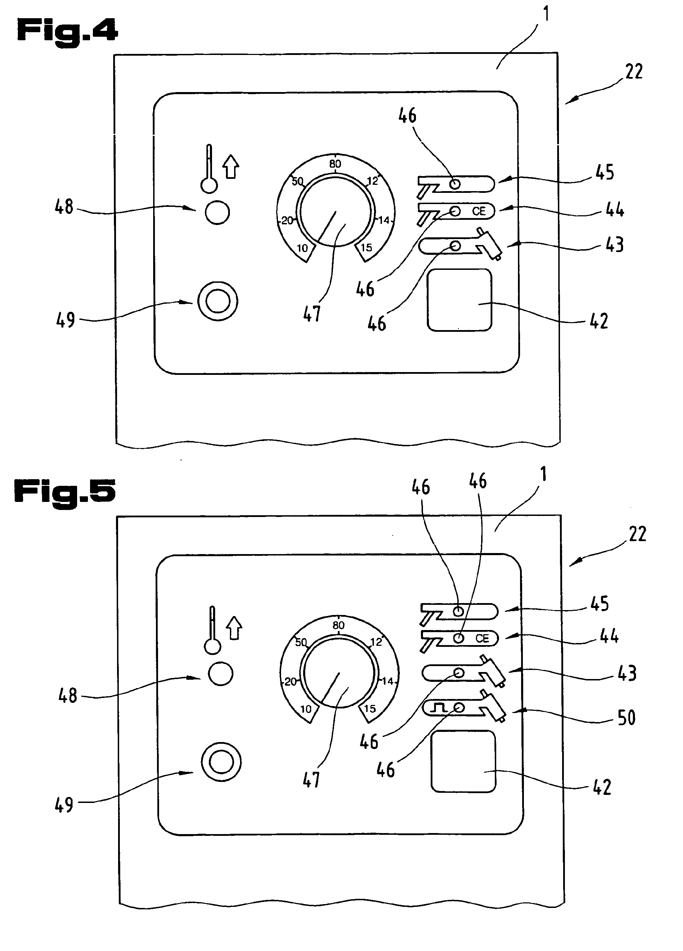

In den Fig. 4 und 5 ist eine Frontansicht des Schweißgerätes 1, insbesondere eines WIG-Schweißgerätes, dargestellt, wobei hierzu im Detail zwei Ausführungsbeispiele einer Ein- und/oder Ausgabevorrichtung 22 dargestellt sind.

Hierzu kann mit einem Taster 42 zwischen den einzelnen Betriebsarten, wie beispielsweise einem WIG-Mode 43, einem CEL-Mode 44 und einem Elektroden-Mode 45, umgeschaltet werden, wobei den einzelnen Betriebsarten Anzeigeelemente 46, beispielsweise in Form von Leuchtdioden, zugeordnet sind, so dass je nach Auswahl die entsprechende Leuchtdiode zu leuchten beginnt. Über einen Drehgeber 47 kann der Benutzer für die entsprechende Betriebsart eine entsprechende Sollwerteinstellung vornehmen. Weiters weist die dargestellte Ein- und/oder Ausgabevorrichtung 22 ein Anzeigeelement 48 für die Übertemperatur sowie eine Anschlussbuchse 49 für die Schweißleitung 17 - in den Fig. 4 und 5 nicht dargestellt - auf.

Damit nunmehr mit dieser einfach und kostengünstigen Ein- und/oder Ausgabevorrichtung 22 mehrere unterschiedliche Schweißparameter eingestellt werden können, ist es möglich, dass bei dem dargestellten Ausführungsbeispiel mit dem einzigen Taster 42 der Ein- und/oder Ausgabevorrichtung 22 ein so genanntes Hintergrundmenü aufgerufen werden kann. Dies erfolgt derartig, dass durch entsprechendes Drücken des Tasters 42 die Bedienungsoberfläche umgeschaltet wird, wodurch in dem so genannten Hintergrundmenü ein für die aktuelle Betriebsart charakteristischer Wert bzw. Schweißparameter verändert werden kann, d.h., dass bei der Betätigung des Tasters 42 über eine definierte Zeitdauer eine Umschaltung der Ein- und/oder Ausgabevorrichtung 22 auf zumindest einen weiteren charakteristischen Schweißparameter für die eingestellte Betriebsart durchgeführt wird. Dabei kann ein Wert bzw. der Schweißparameter beispielsweise bei der Betriebsart - Elektroden-Mode 43 - für die Dynamik, bei der Betriebsart - CEL-Mode 44 - für die Neigung der fallenden Kennlinie, und bei der Betriebsart - WIG-Mode 45 - für die zuvor beschriebenen Schwellwerte 30, 31 eingestellt werden. Bei dem in Fig. 5 dargestellten Schweißgerät 1 wurde die Ein- und/oder Ausgabevorrichtung 22 durch eine Betriebsart - WIG-Puls-Mode 50 - ergänzt, wobei im Hintergrundmenü für diese Betriebsart beispielsweise die Pulsfrequenz verändert werden kann.

Die Verstellung bzw. Anzeige des entsprechenden Wertes bzw. des Wertes für den entsprechenden Schweißparameter wird nunmehr nicht über den Drehgeber 47 verändert bzw. eingestellt, sondern wird durch die Anzeigeelemente 46 repräsentiert bzw. bestimmt, d.h., dass je nach Anzahl der leuchtenden bzw. nicht leuchtenden Anzeigeelemente 46 ein entsprechend hinterlegter Wert ausgewählt werden kann.

Dies kann derartig erfolgen, dass nach dem Umschalten auf das so genannte Hintergrundmenü, also nach einem längeren Betätigen des Tasters 42 beispielsweise über eine Zeitdauer von ca. 2 Sekunden, sämtliche Anzeigeelemente 46 deaktiviert werden, wobei dies dem kleinsten Wert für diesen Schweißparameter entspricht. Bleibt der Taster 42 weiterhin gedrückt oder wird dieser nunmehr kurzzeitig betätigt, so beginnen die einzelnen Anzeigeelemente 46 aufeinander folgend zu leuchten, d.h., dass nach einer definierten Zeitdauer das erste Anzeigeelement 46 und nach einer weiteren Zeitdauer das zweite Anzeigeelement 46 usw. zu leuchten beginnt, wobei den einzelnen Anzeigeelementen 46 nunmehr unterschiedliche Werte zugeordnet sind und somit in einfacher Form eine Einstellung des Schweißgerätes 1 vorgenommen werden kann. Die Anzahl der aktivierten Anzeigeelemente 46 gibt somit über die Höhe bzw. dem Wert des charakteristischen Schweißparameters Auskunft, d.h., dass bei dem Ausführungsbeispiel gemäß Fig. 4 für jeden im Hintergrund definierten charakteristischen Schweißparameter der unterschiedlichen Betriebsarten vier unterschiedliche Werte eingestellt werden können, wogegen bei dem Ausführungsbeispiel gemäß Fig. 5 durch die zusätzliche Betriebsart fünf unterschiedliche Werte hinterlegt sind. Grundsätzlich ist hierzu zu erwähnen, dass die Ausbildung der Ein- und/oder Ausgabevorrichtung 22 nicht auf die dargestellten Ausführungsbeispiele beschränkt ist, sondern bei jeder bekannten Ein- und/oder Ausgabevorrichtung 22 ein derartiges Hintergrundmenü verwirklicht werden kann.

Wird beispielsweise die Betriebsart - WIG-Mode 43 - ausgewählt, so können die Schwellwerte 30, 31 vom Benutzer voreingestellt werden. Dies erfolgt bei dieser Art der Einstellung derartig, dass beispielsweise für die ersten beiden Anzeigeelemente 46 - also kein Anzeigeelement 46 oder das erste Anzeigeelement 46 für die Betriebsart -WIG-Mode 43 - leuchtet - jeweils ein entsprechender Wert für den oberen Schwellwert 30 hinterlegt ist, wogegen für die beiden weiteren Möglichkeiten, also die Anzeigeelemente 46 für die Betriebsarten CEL-Mode 44 oder Elektroden-Mode 45 leuchten, jeweils ein Wert für den unteren Schwellwert 31 hinterlegt ist. Damit kann der Benutzer zwischen zwei unterschiedlichen Schwellwerten 30, 31 auswählen. Die Einstellung der Schwellwerte 30, 31 kann auch derartig erfolgen, dass die Verstellung der beiden Schwellwerte 30, 31 gleichzeitig erfolgt, so dass eine Verschiebung der beiden Schwellwerte 30, 31 noch oben oder unten bei einer vordefinierter Hysterese erfolgt.

Selbstverständlich ist es möglich, dass mehrere Anzeigeelemente 46 angeordnet sein können, denen wiederum jeweils ein entsprechender Wert zugeordnet sein kann. Es ist auch möglich, dass die Steuerung der Anzeigeelemente 46 in Form eines Binärcodes erfolgt, so dass für den charakteristischen Schweißparameter einer Betriebsart noch weitere Werte hinterlegt sein können.

Durch eine derartige Einstellmöglichkeit, also einer so genannten Doppelbelegung von Elementen, wird in vorteilhafter Weise erreicht, dass eine erhebliche Einsparung von Bauelementen, wie Taster 42, Drehgeber 47, Anzeigeelemente 46 usw. eingespart werden können, wobei jedoch der Benutzer die Möglichkeit hat, unterschiedliche Werte für einen bestimmten Schweißparameter zu einer bestimmten Betriebsart des Schweißgerätes 1 auswählen zu können. Damit kann die Ein- und/oder Ausgabevorrichtung 22 für ein Schweißgerät 1 kostengünstig hergestellt werden und es wird eine erhebliche Größenreduktion der Ein- und/oder Ausgabevorrichtung 22 erzielt, so dass ein kompaktes kleines Schweißgerät 1 mit mehreren Einstellmöglichkeiten mit nur einem Taster 42 geschaffen werden kann.

Der Ordnung halber sei abschließend darauf hingewiesen, dass zum besseren Verständnis des Schweißgerätes 1 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

## Patentansprüche

1. Verfahren zum Einstellen eines Schweißgerätes (1), insbesondere eines WIG-Schweißgerätes, bei dem über eine Ein- und/oder Ausgabevorrichtung (22) unterschiedliche Schweißparameter und/oder Betriebsarten für einen Schweißprozess eingestellt werden und die Ein- und/ oder Ausgabevorrichtung (22) aus zumindest einem Taster (42) für die Betriebsarten, wie beispielsweise WIG-Mode (43), CEL-Mode (44), Elektroden-Mode (45) oder WIG-Pulse-Mode (50), und einem Drehgeber (47) für die Sollwerte sowie einem oder mehreren Anzeigeelementen (46), wie beispielsweise einer Leuchtdiode, gebildet wird, wobei die Einstellungen von der Ein- und/oder Ausgabevorrichtung (22) an eine Steuervorrichtung (4) zur Durchführung eines entsprechenden Schweißprozesses übergeben werden, **dadurch gekennzeichnet, dass** bei der Betätigung des Tasters (42) der Ein- und/oder Ausgabevorrichtung (22) für eine definierte, längere Zeitdauer die Bedienungsoberfläche umgeschaltet wird, wodurch ein Hintergrundmenü aufgerufen wird und **dadurch** eine Umschaltung der Ein- und/oder Ausgabevorrichtung (22) auf zumindest einen weiteren charakteristischen Schweißparameter für die eingestellte Betriebsart durchgeführt wird, wobei die Verstellung des entsprechenden Wertes für den weiteren Schweißparameter nicht über den Drehgeber (47) erfolgt, sondern je nach Anzahl der leuchtenden bzw. nicht leuchtenden Anzeigeelemente (46) mit dem Taster (42) durch das kurzzeitige Betätigen oder Weiterhingedrückthalten ein entsprechend hinterlegter Wert ausgewählt wird.

2. Verfahren nach Anspruch 1, **dadurch gekennzeichnet, dass** bei umgeschalteter Ein- und/oder Ausgabevorrichtung (22) in das Hintergrundmenü je nach ausgewählter Betriebsart des Schweißgerätes jedem Anzeigeelement (46) ein vordefinierter Wert für den weiteren charakteristischen Schweißparameter hinterlegt wird.

3. Verfahren nach Anspruch 1 oder 2, **dadurch gekennzeichnet, dass** ein Wert bzw. der Schweißparameter bei der Betriebsart - Elektroden-Mode (45) für die Dynamik, bei der Betriebsart - CEL-Mode (44) für die Neigung der fallenden Kennlinie, und bei der Betriebsart WIG-Mode(43) für die Schwellwerte bzw. bei der Betriebsart WIG-Puls-Mode (50) für die Pulsfrequenz eingestellt wird.

4. Verfahren nach einem oder mehreren der Ansprüche 1 bis 3, **dadurch gekennzeichnet, dass** die Anzeige des entsprechenden Wertes bzw. des Wertes für den entsprechenden Schweißparameter durch die Anzeigeelemente (46) repräsentiert bzw. bestimmt wird.

5. Verfahren nach einem oder mehreren der Ansprüche 1 bis 4, **dadurch gekennzeichnet, dass** je nach Anzahl der leuchtenden bzw. nicht leuchtenden Anzeigeelemente (46) für die Betriebsarten des Schweißgerätes ein entsprechend hinterlegter Wert ausgewählt wird.

6. Verfahren nach einem oder mehreren der Ansprüche 1 bis 5, **dadurch gekennzeichnet, dass** die Steuerung der Anzeigeelemente (46) in Form eines Binärcodes erfolgt.

7. Verfahren nach einem oder mehreren der Ansprüche 1 bis 6, **dadurch gekennzeichnet, dass** jedem Anzeigeelement ein bestimmter Schweißparameter zugeordnet wird, wobei die Einstellung des Wertes für die unterschiedlichen Schweißparameter, also dem ausgewählten Anzeigeelement, über den Drehgeber (47) erfolgt.

## Claims

1. Method of setting a welding apparatus (1), in particular a WIG welding apparatus, whereby various welding parameters and/or operating modes are set for a welding process via an input and/or output device (22), and the input and/or output device (22) has at least one button (42) for the operating modes, such as WIG mode (43), CEL mode (44), electrode mode (45) or WIG pulse mode (50) for example, and a dial indicator (47) for the desired values as well as one or more display elements (46), such as light-emitting diodes for example, and the settings are transferred from the input and/or output device (22) to a control system (4) in order to run a corresponding welding process, **characterised in that** when the button (42) of the input and/or output device (22) is depressed for a defined, longer period, the control surface is switched, which causes a background menu to be retrieved and as a result of which the input and/or output device (22) is switched to at least one other characteristic welding parameter for the set operating mode, and the corresponding value for the other welding parameter is not set by means of the dial indicator (47) and instead a value stored for this purpose is selected as a function of the number of display elements (46) illuminated or not illuminated by briefly operating or continuing to depress the button (42).

2. Method as claimed in claim 1, **characterised in that** when the input and/or output device (22) is switched to the background menu, a predefined value is stored for every display element (46) for the other characteristic welding parameter depending on the selected operating mode of the welding device.

3. Method as claimed in claim 1 or 2, **characterised in that** a value or the welding parameter is set for the dynamics in electrode mode operating mode (45), for the slope of the descending characteristic curve in CEL mode operating mode (44), for the threshold values in WIG mode operating mode (43) and for the pulse frequency in WIG pulse mode operating mode (50).

4. Method as claimed in one or more of claims 1 to 3, **characterised in that** the display of the corresponding value or the value for the corresponding welding parameter is represented and determined by the display elements (46).

5. Method as claimed in one or more of claims 1 to 4, **characterised in that**, depending on the number of illuminated and non-illuminated display elements (46), a corresponding stored value is selected for the operating modes of the welding apparatus.

6. Method as claimed in one or more of claims 1 to 5, **characterised in that** the display elements (46) are controlled in the form of a binary code.

7. Method as claimed in one or more of claims 1 to 6, **characterised in that** a specific welding parameter is assigned to every display element and the value for the different welding parameters is set by means of the dial indicator (47), in other words by the selected display element.

## Revendications

1. Procédé de réglage d'un appareil de soudage (1), en particulier d'un appareil de soudage WIG, dans lequel, par un dispositif d'entrée et/ou d'émission (22), des paramètres de soudage et/ou types de fonctionnement différents pour un processus de soudage sont réglés, et le dispositif d'entrée et/ou d'émission (22) est constitué par au moins un bouton-poussoir (42) pour les types de fonctionnement, comme par exemple le mode WIG (43), le mode CEL (44), le mode électrodes (45) ou le mode impulsion WIG (50), et un encodeur (47) pour les valeurs de consigne et par un ou plusieurs éléments d'affichage (46), comme par exemple une diode luminescente, où les réglages sont transmis du dispositif d'entrée et/ou d'émission (22) à un dispositif de commande (4) pour l'exécution d'un processus de soudage correspondant, **caractérisé en ce que** lors de factionnement du bouton-poussoir (42) du dispositif d'entrée et/ou d'émission (22), pendant une durée définie plus longue, la surface de commande est commutée par quoi un menu d'arrière-plan est appelé et de ce fait une commutation du dispositif d'entrée et/ou d'émission (22) à au moins un autre paramètre de soudage caractéristique du type de fonctionnement réglé est exécutée, où le changement de la valeur correspondante pour l'autre paramètre de soudage n'a pas lieu par l'encodeur (47), mais respectivement selon le nombre d'éléments d'affichage luminescents respectivement non luminescents (46), une valeur stockée correspondante est sélectionnée avec le bouton-poussoir (42), par l'actionnement de courte durée ou par le maintien à l'état enfoncé.

2. Dispositif selon la revendication 1, **caractérisé en ce que**, lorsque le dispositif d'entrée et/ou d'émission (22) est commuté, il est stocké dans le menu d'artière-plan, selon le mode de fonctionnement sélectionné de l'appareil de soudage, pour chaque élément d'affichage (46) une valeur prédéfinie pour l'autre paramètre de soudage caractéristique.

3. Procédé selon la revendication 1 ou 2, **caractérisé en ce qu'**une valeur respectivement le paramètre de soudage est réglé pour le type de fonctionnement-mode électrodes (45) pour la dynamique, pour le mode de fonctionnement - mode-CEL (44) pour l'inclinaison de la ligne caractéristique en chute et pour le mode de fonctionnement mode WIG (43) pour les valeurs de seuil respectivement pour le mode de fonctionnement mode impulsion WIG (50) pour la fréquence de répétition des impulsions.

4. Procédé selon l'une ou plusieurs des revendications 1 à 3, **caractérisé en ce que** l'affichage de la valeur correspondante respectivement de la valeur du paramètre de soudage correspondant est représentée respectivement déterminée par les éléments d'affichage (46).

5. Procédé selon l'une ou plusieurs des revendications 1 à 4, **caractérisé en ce que** selon le nombre des éléments d'affichage luminescents respectivement non luminescents (46), pour les modes de fonctionnement de l'appareil de soudage, une valeur stockée d'une manière correspondante est sélectionnée.

6. Procédé selon l'une ou plusieurs des revendications 1 à 5, **caractérisé en ce que** la commande des éléments d'affichage (46) a lieu sous la forme d'un code binaire.

7. Procédé selon l'une ou plusieurs des revendications 1 à 6, **caractérisé en ce qu'**il est associé à chaque élément d'affichage un paramètre de soudage déterminé, où le réglage de la valeur pour les paramètres de soudage différents, donc l'élément d'affichage sélectionné, a lieu par l'encodeur (47).
